# EUROPEAN PATENT SPECIFICATION

(11) **EP 0 594 923 B1**
(45) Date of publication and mention of the grant of the patent: **23.09.1998**
(21) Application number: 92830658.8
(22) Date of filing: 07.12.1992
(51) Int. Cl.: G11B 23/113

(54) **Cassette tape loading process providing for recovery of cassettes previously loaded with waste tape, and loading machine for putting the process into practice**
Ladeprozess eines Kassettenbandes zur Wiederverwertung von vorher mit Abfallband gefüllten Kassetten und Lademaschine zur Verwirklichung des Prozesses
Méthode de chargement de cassettes à bande permettant de charger à nouveau des cassettes qui ont été précédemment chargées avec une bande présentant un défaut et machine de chargement pour mettre en oeuvre la méthode précédente

(30) Priority: 30.10.1992 IT MI922505
(43) Date of publication of application: 04.05.1994
(73) Proprietor: TAPEMATIC S.p.A., I-20052 Monza (Milano) (IT)
(72) Inventor: Perego, Luciano, I-20050 Mezzago (Milano) (IT)
(74) Representative: Righetti, Giuseppe

(56) References cited:
- EP-A- 210 844
- US-A- 4 770 359

## Description

The present invention relates to a cassette tape loading process providing for recovery of cassettes previously loaded with waste tape.

The present invention also pertains to a loading machine for putting the above process into practice, said machine being of the type comprising: the features recited in the preamble of claim 9.

It is known that loading of magnetic tape into audio and/or video cassettes is carried out by appropriate cassette loading machines that, at each work cycle, pick up an empty cassette from an infeed conveyor and operatively engage it in a work station in which it is loaded with magnetic tape (hereinafter referred to as "use tape") continuously fed from a supply reel or "pancake". An example of such a cassette loading machine is disclosed by EP-A- 0 210 844 which is herein referred as the most relevant prior art. In greater detail, the cassette reaching the loading station contains a leader connected at both ends to first and second winding hubs rotatably housed in the cassette itself.

Suitable extractor means consisting for example of pin elements supported by respective drive arms, carry out the extraction of the leader from a front opening provided in the cassette, and deposit it onto an engagement surface and a first holding seat formed on a first support block and a second support block respectively, said blocks being disposed in side by side relation close to the front opening.

A cutting means operates between the support blocks and cuts the leader into a leading portion engaged to the first block and connected to the first winding hub and a second portion engaged to the second block and connected to the second winding hub.

By imparting a movement to the second block, a leading end of the use tape to be loaded engaged in a second holding seat formed in the first block is consecutively aligned with the first portion of the leader and subsequently spliced thereto through application of adhesive joining tape, upon the action of a splicing unit acting on the blocks.

Then the first winding hub is driven in rotation thereby causing a predetermined amount of use tape to be wound onto the cassette. When winding is over, the use tape still engaged to the support blocks is cut by said cutting means and, by displacing the second block again, the second portion of the leader is brought into alignment with the trailing end of the loaded use tape to which it is spliced. A further rotation of the first winding hub causes the end portion of the use tape and the second portion of the leader to be introduced into the cassette front opening, said cassette being then ejected from the loading station, while a new cassette to be processed takes its place.

After the above explanation it is clear that in the field of mass-produced loaded cassettes it may happen in a relatively frequent manner that a use tape loaded into a cassette exhibits manufacture defects, mainly due to an imperfect coating of the tape with the sensitive layer.

In this case the loaded cassette must be discarded. As a result, an important amount of cassettes to be discarded is produced and said cassettes must be currently disposed of as cumbersome waste products. This fact involves a considerable loss of money due both to the costs of the cassettes and use tape contained therein that are thrown away, and the cost resulting from the necessity of carrying important amounts of cassettes to a disposal equipment. It is to be pointed out that disposal of these waste products involves important problems from the ecological point of view to such an extent that in many countries it is subjected to heavy taxes.

Under this situation, the invention aims at solving the above problems, by a new loading process according to which it is possible to extract the waste tape from a loaded cassette in a very short time, making the cassette immediately available for being loaded with use tape again, without on the other hand giving rise to any qualitative decay of the finished product.

In greater detail, the invention pertains to a cassette tape loading process providing for recovery of cassettes previously loaded with waste tape, characterized in that it comprises the steps recited in claim 1.

In accordance with the invention this process is put into practice by a loading machine characterized by the features recited in the characterizing portion of claim 9.

Further features and advantages will become more apparent from the detailed description of a preferred embodiment of a cassette tape loading process providing for recovery of cassettes previously loaded with waste tape, and a loading machine for putting the process into practice, in accordance with the present invention. This description will be given hereinafter, by way of nonlimiting example, with reference to the accompanying drawings, in which:
- Fig. 1 is a fragmentary perspective view of a work station of a machine for loading tape into cassettes, adapted to carry out the process of the present invention;
- Fig. 2 is a diagrammatic vertical section of the machine, taken at the work station;
- Fig. 3 is a diagrammatic front view showing a V-O cassette disposed in the work station, during the step of extracting the leader from the front opening thereof;
- Fig. 4 shows a cassette previously loaded with waste tape, during a step in which a second leader portion is get ready for being separated from the waste tape contained in the cassette;
- Fig. 5 shows the cassette of Fig. 4 during an operating step in which the waste tape extracted from the cassette is get ready for being separated from a first leader portion;
- Fig. 6 is another perspective view of the cassette during the step in which the waste tape is extracted therefrom by auxiliary threading means;
- Figs. 7 to 16 diagrammatically show, in top views, the positions taken by the support blocks with respect to the cassette being processed, during the different steps of the process in question.

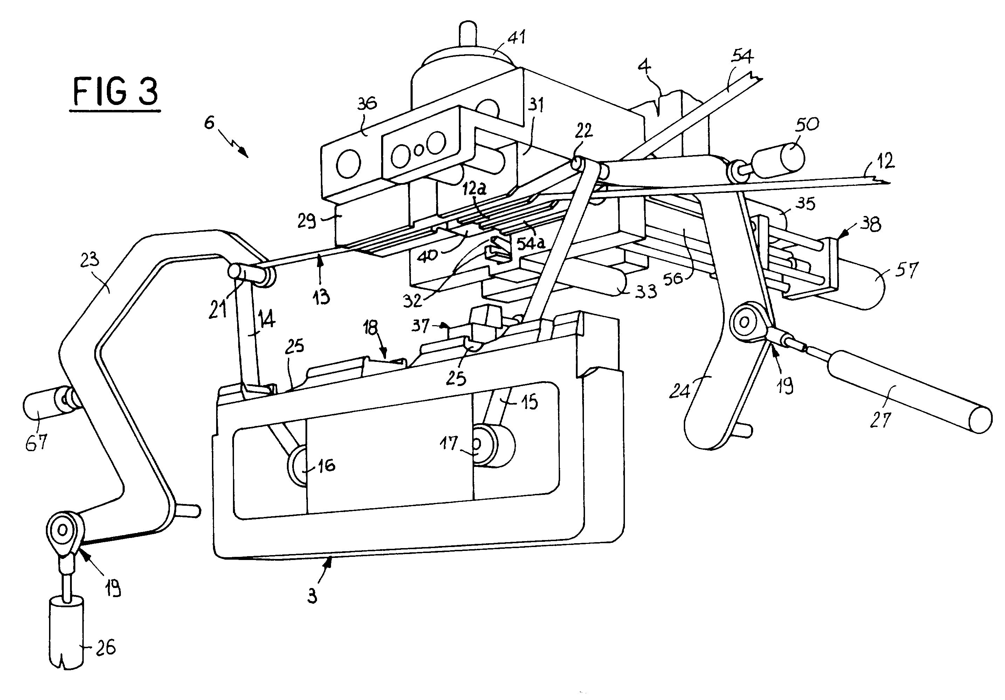

Referring particularly to Fig. 2, reference numeral 1 generally denotes a cassette loading machine adapted to put into practice a cassette tape loading process providing for recovery of cassettes previously loaded with waste tape, in accordance with the present invention.

In the embodiment shown, the loading machine is arranged to operate on video cassettes of the VHS type and represents an innovation with respect to a loading machine being the object of Patent Application EP-89830147.8 in the name of the same Applicant.

However the process in question and, more generally, the innovative concepts proposed by the present invention are intended to be put into effect also on loading machines of a type different from the one herein identified by way of example only.

As shown in Fig. 2, the loading machine 1 provides for the use of a cassette feeding unit consisting for example of a belt conveyor 2 on which a plurality of cassettes 3 being processed is disposed, said cassettes being sequentially conveyed to a front panel 4 of the machine. Delivery means 5 picks up the individual cassettes 5 from the conveyor belt 2 and sequentially engages them into a work station 6 at which each cassette undergoes the different operating steps for accomplishing the loading process. The delivery means 5 comprises for example an overturning device 7 that, at each operating cycle, picks up one cassette from the end of the belt conveyor 2 and disposes it vertically on first support elements carried by a transferring member 9. The transferring member 9 is movable along vertical guides (not shown) between one position in which it receives the cassette 3 engaged by the overturning device 7, to a second position in which said cassette is engaged in a pair of side guides 10 that, following a displacement towards the front panel 4, cause the cassette to be operatively engaged in the work station 6.

Simultaneously with the reception by the transferring member 9 of the cassette 3 engaged in the overturning device 7, also the engagement of a loaded cassette 3 on second support elements 11 carried by the transferring member itself occurs. The loaded cassette 3 will be then moved away from the work station 6 simultaneously with lowering of the transferring member 9 to the second position and will be sent, in known manner, to a collection conveyor not shown.

In the embodiment shown, the loading machine 1 is capable of carrying out the loading of empty audio or video cassettes (currently referred to as C-O and V-O cassettes) according to a conventional processing cycle aiming at winding a predetermined amount of use tape 12 into a cassette, which tape is continuously supplied from a pancake not shown.

Although known per se, this processing cycle will be described hereinafter for making the description more complete and for easier understanding.

Cassettes 3 reaching the work station 6 conventionally have a leader 13 (Fig. 3) a first portion 14 of which and a second portion 15 of which are respectively connected to first and second winding hubs, 16 and 17, rotatably housed in the cassette.

In C-O or V-O type cassettes 3 the first and second portions, 14 and 15, of leader 13 form a single leader piece extending before a front opening 18 of the cassette 3.

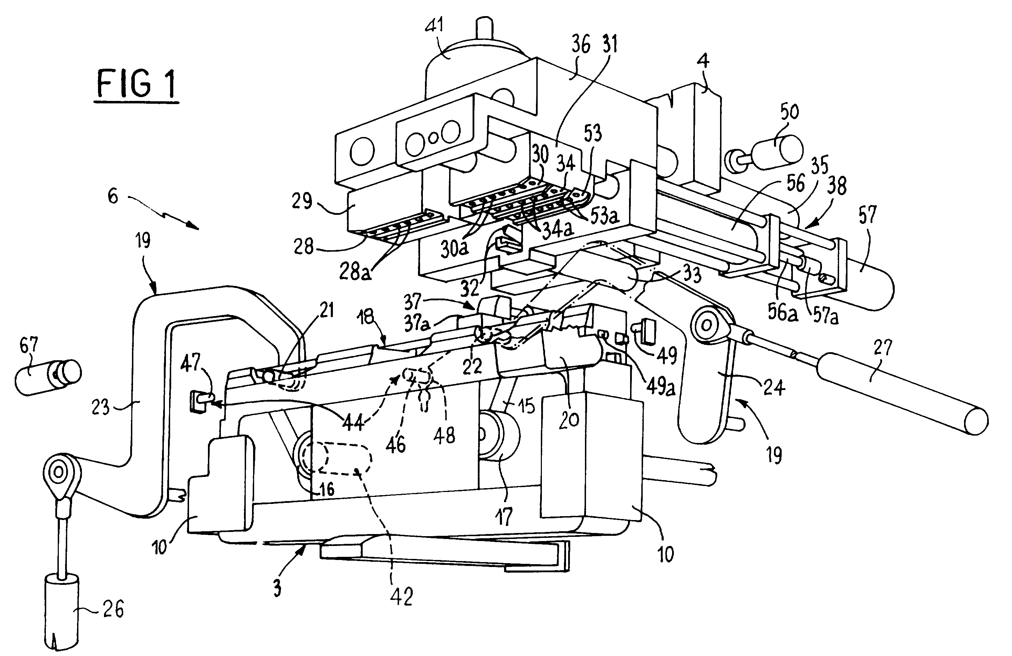

In the work station 6 provision is made for extraction means 19 arranged to suitably extract the leader 13 from the front opening 18 upon opening of a protection door 20 (Fig. 1), in a manner known per se and therefore not described. The extraction means 19 comprises first and second extractor elements 21, 22 engaged to the ends of a first and a second drive arm, 23, 24 respectively, and arranged to penetrate into corresponding access places 25 provided close to the front opening 18 of the cassette 3, as soon as said cassette is operatively engaged in the work station 6. Each extractor element 21, 22 is susceptible of being displaced, upon command of a main actuator 26, 27 acting on the corresponding drive arm 23, 24 between a rest position, in which it is introduced into the corresponding access space 25, and a maximum-extracted position in which, as shown in fig. 3, it is located at the outside of the front opening 18 of the cassette 3 to a predetermined distance therefrom.

As clearly shown in Fig. 3, after the C-O or V-O cassette has been engaged in the work station 6, extractor elements 21, 22 are drivingly moved to the maximum-extracted position so that the leader 13 is extracted almost completely and laid down before the cassette front opening 18.

In greater detail, during this step the leader 13 is disposed on an engagement surface 28 exhibited by a first support block 29 and a first holding seat 30 disposed in alignment with the engagement surface 28 and exhibited by a second support block 31 disposed side by side with the first block 29. In known manner, the engagement surface 28 and the first holding seat 30 facing the cassette front opening 18 are designed to hold the leader 13 by effect of a suction action produced through a plurality of holes 28a, 30a opening to said surface and seat.

A first cutting means operates between the first and second blocks 29, 31 and it consists for example of a first cutter 32 operated by a respective actuator 33 that cuts the leader 13 according to a transverse direction, so as to sever it into a first portion 14 and a second portion 15. When the cut has been executed, the first portion 14 will extend between the first support block 29 and the first winding hub 16, whereas the second portion 15 will extend between the second support block 31 and the second winding hub 17.

The first portion 14 of leader 13 must be at this point connected to the use tape to be loaded into the cassette 3. In greater detail, the use tape 12 has a leading end 12a engaged to the second block 31 at a second holding seat 34 disposed parallelly in side by side relation with the first holding seat 30 and provided with respective suction holes 34a.

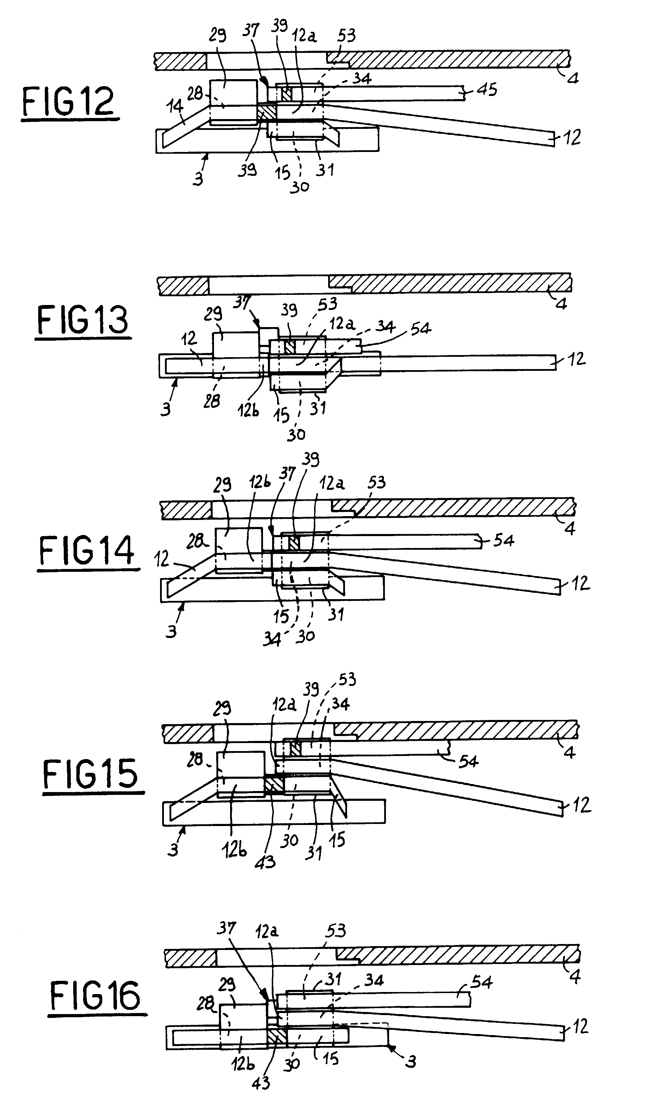

Upon return of the extractor members 21, 22 to the rest position, suitable displacement means consisting of a displacement actuator 35 acting on a frame 36 carrying both blocks 29, 31 causes the simultaneous displacement of the blocks from a first operating condition in which the engagement surface 28 and holding seat 34 aligned therewith are facing the front opening 18, to a second operating condition in which said engagement surface and holding seat are operatively located in front of a splicing unit 37 mounted to the front panel 4 at a laterally offset position with respect to the cassette 3. Simultaneously with this operation, upon the action of drive means 38 to be better described in the following, the second support block 31 is moved relative to the first support block 29 so that the second holding seat 34 is brought into alignment with the engagement surface 28 of the first block and, as a consequence, the leading end 12a of the use tape to be loaded 12 is brought into alignment with the first leader portion 14 (Fig. 12). In known manner, the splicing unit 37 by an arm means 37a movable towards the blocks 29, 31, applies a first adhesive joining tape 39 onto the ends of the first portion 14 of the leader and the leading part 12a of the tape, so as to join them consecutively. An abutment element 40 intermediate the blocks 29, 31 acts against the action of the arm means 37a in order to ensure an optimal adhesion of the adhesive tape to the leader 13 and use tape 12. This abutment element 40 is movable, upon command of a fluid-operated cylinder 41, apart from the leader 13 and tape 12 in order to make room for the first cutting member 32 when this cutting member must be operated.

Blocks 29, 30 are then brought again to the first operating condition and, upon disengagement of the first portion 14 of the leader and the use tape to be loaded 12 by interrupting the suction effect on the engagement surface 28 and second holding seat 34, the first winding hub 16 is driven in rotation upon the action of a winding spindle 42 (Fig. 1) so as to cause the winding of a predetermined amount of use tape 12.

When the desired amount of use tape 12 has been wound onto the hub 16, the tape is engaged to the engagement surface 28 and the second holding seat 34 of blocks 29, 31 by a new displacement of the extractor element to the maximum-extracted position. The use tape 12 is then cut upon the action of the first cutter 32, and blocks 29, 31, upon returning of the extractor elements 21, 22 to the rest position, are brought to the second operating condition. Simultaneously with this operation, the second block 31 is moved again relative to the first block 29 so as to bring the second leader portion 15 into alignment with the trailing end 12b of the tape 12 held by the engagement surface 28.

Then the splicing unit 37 is operated and it applies a second adhesive joining tape 43 (Fig. 15) to the trailing end 12b of the use tape and the second portion 15 of the leader.

The cassette loading process is terminated by driving the first winding hub 16 in rotation again, in order to make the tape 12 and the second portion of leader 15 ultimately enter the cassette opening 18, said cassette being then released from the work station 6 and moved away by the transferring member 9.

The leading end 12a of the use tape 12 to be loaded during a following processing cycle is still disposed on the second holding seat 34 of the second block 31.

As previously said, the above description refers to a conventional cassette loading cycle which can be executed by the loading machine 1 on C-O or V-O type cassettes.

In accordance with the present invention, the loading machine 1 can also be used for recovering cassettes 3 previously loaded with waste tape 45.

Cassettes 3 preloaded with waste tape 45 can be indiscriminately fed to the belt convevor 2 either in the absence of cassettes of the C-O or V-O type or in the presence of these cassettes, and in the latter case they can be alternated with said C-O or V-O type cassettes, even randomly.

In accordance with the invention, in order to enable the machine 1 to differentiate preloaded cassettes 3 from C-O or V-O cassettes, sensor means 44 is associated with the work station 6, being arranged to detect the presence or not of waste tape 45 within each cassette 3 being engaged in the work station.

In greater detail sensor means 44 substantially comprises at least one photoemitter 46 and one photoreceiver 47 located at the inside and outside respectively of the cassette 3 engaged in the work station 6. Photoemitter 46, on engagement of the cassette 3 in the work station 6, enters a housing 48 conventionally arranged in the cassette and lends itself to emit a light signal detectable by the first photoreceiver 47, through an aperture (not seen in the drawings) conventionally formed in the cassette.

In the absence of waste tape 45 in the cassette 3, the light signal is subjected to cross the first portion 14 of the leader, at a length thereof extending from the first hub 16 to the front opening 18 of the cassette. Since, as is known, the leader 13 is made of transparent material, the light signal can reach the first photoreceiver 47.

In the presence of waste tape 45 wound onto the first hub 16, the light signal is on the contrary intercepted, as this tape is not transparent; therefore the first photoreceiver 47 receives no signal and this lack of signal means the presence of waste tape 45 on the first hub 16.

Provision is also made for a second photoreceiver 49 disposed to the outside of the cassette, at a laterally opposite position relative to the first photoreceiver 47. The second photoreceiver 49 lends itself to sense the light signal emitted from photoemitter 46 through a corresponding aperture 49a, in order to detect the presence of waste tape 45 wound onto the second hub 17, following the same modalities as previously described with reference to the first photoreceiver 47.

If both photoreceivers 47, 49 receive a signal from the photoemitter 46, a microprocessor, not shown as not of importance to the ends of the invention, drives the loading machine 1 in operation according to the processing cycle described above with reference to loading of C-O or V-O cassettes.

On the contrary, if the sensor means 44 detects the presence of waste tape 45 inside the new cassette 3 engaged in the work station 6, said electronic control box drives the execution of a new loading process for recovery of the cassette 3 previously loaded.

It is to be stated that, should the second photoreceiver 49 detect the presence of waste tape 45 wound onto the second hub 17, it would be possible to drive in rotation the first hub 16 for completely winding the waste tape 45 onto the first hub itself or, alternatively, the cassette 3 could be directly disengaged from the work station 6 making thereby room for a new cassette 3 being processed.

As a result of the extractor elements 21, 22 leaving their rest position, the second portion 15 of the leader and a trailing section 45a of the waste tape 45 spliced to said leader portion are extracted from the front opening 18 and brought into engagement on the first holding seat 30 of the second support block 31 and the engagement surface 28 of the first support block 29, respectively, said holding seat and engagement surface being in mutual alignment.

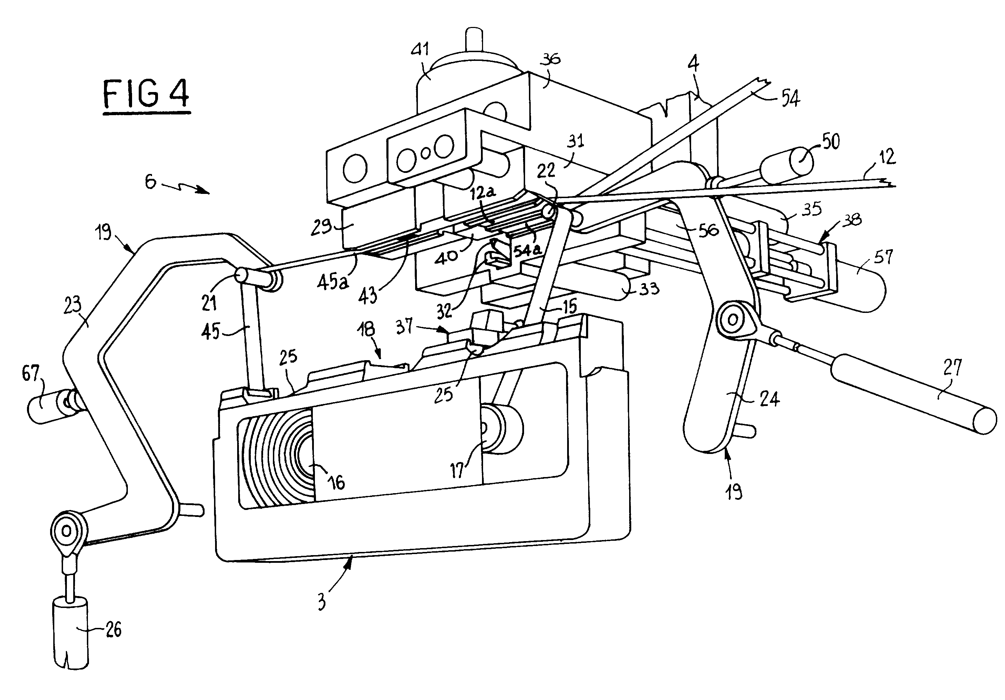

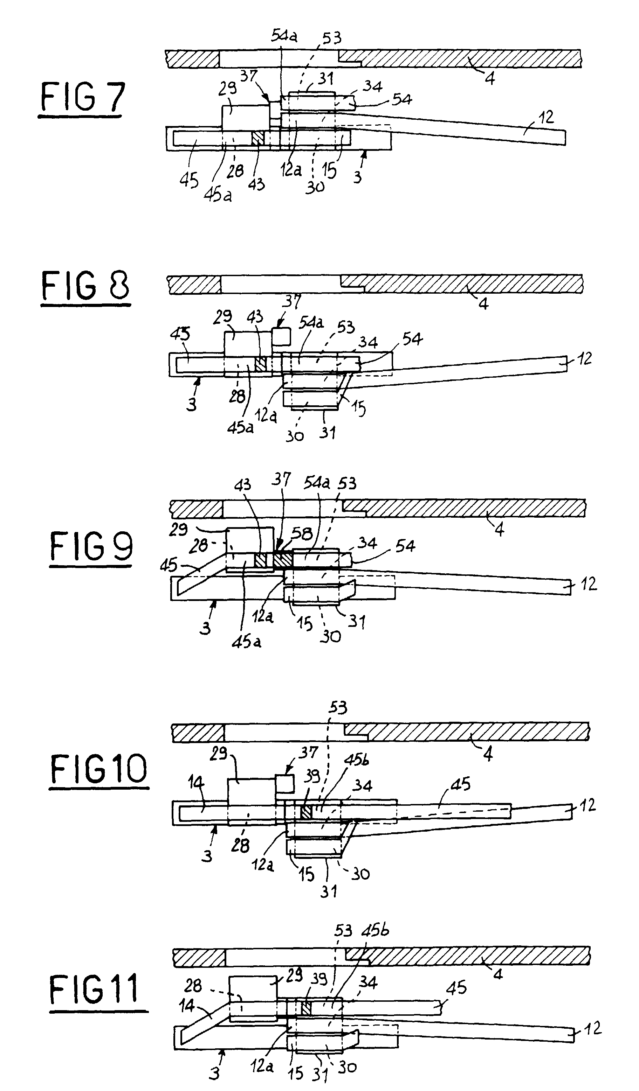

Simultaneously with this engagement step, the splice between the waste tape 45 and second portion 15 of the leader, represented by the second adhesive joining tape 43 applied in the processing cycle previously executed on the same cassette is advantageously positioned on the first block 29, in such a manner that it is laterally offset towards the first block, with respect to the direction of operation of the first cutting member 32 (Figs. 4 and 7). This positioning of the splice is achieved by bringing the first extractor element 21 to the maximum-extracted position and simultaneously bringing the second extractor element 22 to a position intermediate the rest position and the corresponding maximum-extracted position.

As shown in Fig. 4, stopping of the second extractor element 22 to its intermediate position occurs by means of a first auxiliary actuator 50, that, when activated, interferes with the displacement of the second drive arm 24 in order to stop, against the action of the corresponding main actuator 27, the displacement of the second extractor element to its maximum-extracted position.

Upon the action of the first cutting member 32, the second portion 15 of the leader is cut and completely cleared of the second adhesive joining tape 43, which is kept attached to the trailing section 45a of the waste tape 45 held by the engagement surface 28 of the first block 29.

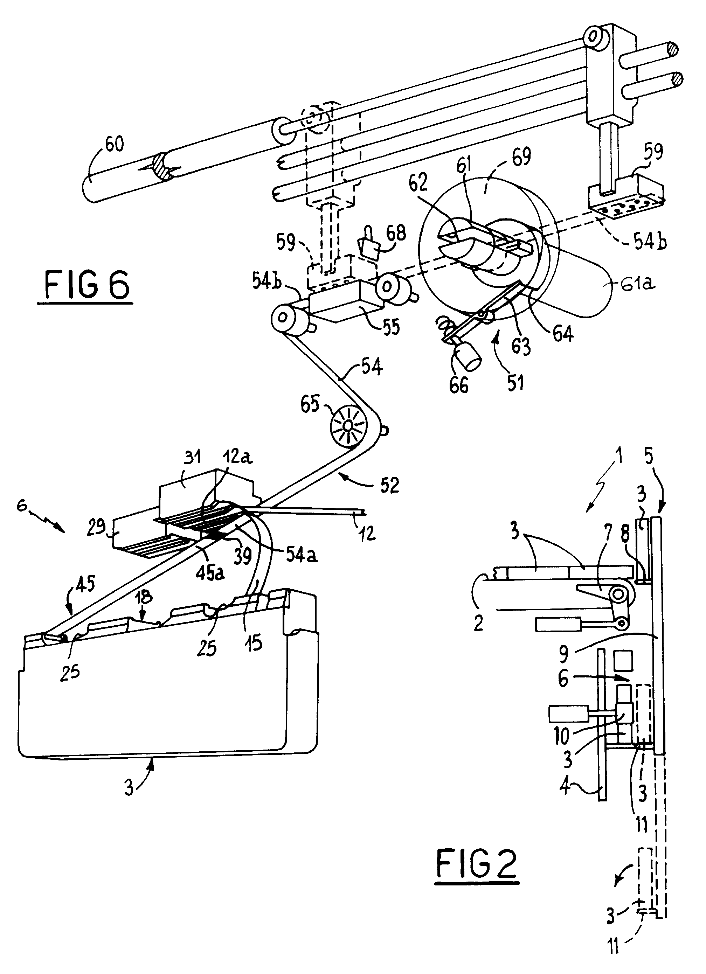

Under this situation, the trailing section 45a of the waste tape 45 lends itself to be connected to auxiliary threading means 51 (Fig. 6), originally provided in the loading machine in question in order to completely take the waste tape out of the cassette 3.

In greater detail, the connection of the trailing section 45a of the waste tape 45 with the auxiliary threading means 51 is carried out by interconnecting means 52 providing for the presence of a third holding seat 53 on the second block 31, disposed parallelly in side by side relation with the second holding seat 34. The third holding seat 53 is designed to hold an end portion 54a of a tape length 54 discarded in a previous processing cycle, still by effect of suction produced through holes 53a opening to said third holding seat. This tape length 54 has its foremost portion 54b This tape length 54 has its foremost portion 54b arranged in engagement on a holding element 55 being part of the auxiliary threading means 51. In the example shown the holding element 55 substantially comprises a fixed block exhibiting a support surface on which, in this case too as a result of a suction effect, the foremost portion 54b of the tape length 54 is retained

After carrying out the cut of the second portion 15 of the leader and upon return of the extractor elements 21, 22 to the rest position, the second block 31 is moved with respect to the first block 29 so that the third holding seat 53 carrying the end portion 54a of length 54 is disposed in alignment with the engagement surface 28 carrying the trailing section 45a of the waste tape 45 (Fig. 8).

In accordance with a further feature of the present invention, in order to enable the first, second, and third holding seats 30, 34, 53 to be selectively brought into alignment with the engagement surface 28, it is provided that said drive means 38 should be comprised of a first movement actuator 56 the rod 56a of which (only partly shown in the drawings) acts on the second block 31 so as to move it from a first position in which the first holding seat 30 is in alignment with the engagement surface 28 to a third position in which the third holding seat 53 is in alignment with the engagement surface itself. A second movement actuator 57 is fixed in succession to the first actuator 56 and, when activated, said second actuator acts by its rod 57a against the rod 56a of the first actuator 56, in order to restrain the stroke of the second block 31 towards the third position, stopping it to a second position in which the alignment of the second holding seat 34 with the engagement surface 28 is achieved.

After the third holding seat 53 has been brought into alignment with the engagement surface 28, the first and second blocks 29, 31 are brought to the second operating position and the splicing unit 37 carries out the splicing between the trailing section 45a of the waste tape 45 and the first end portion 54a of the tape length 54, by application of a third adhesive joining tape 58 (Fig. 9).

Blocks 20, 31 are brought back to the first operating condition and, upon disengagement of the waste tape 45 and tape length 54 from said blocks by interruption of said suction effect, a step providing the extraction of the waste tape 45 from the cassette 3 is initiated upon the action of the auxiliary threading means 51.

In the connection, the auxiliary threading means 51 comprises a gripper element 59 controlled by a fluid-operated displacement cylinder 60, said gripper element being movable between a first position in which it is disposed close to the holding element 55 for picking up, as a result of a suction effect, the foremost portion 54b of length 54, and a second position in which it is moved away from the holding element 55 so that it can extend the tape length 54 in a predetermined direction.

A winding fork 61 operates on the length portion 54 extending between the holding element 55 and gripper element 59 moved to the second position. Said fork, in a manner known per se, is movable perpendicularly to the movement direction of the gripper element 59 between a rest position in which it does not interfere with the movement of the gripper element, and an operating position in which, as shown in Fig. 6, it operatively engages the tape length 54 at a diametrical slit 62 provided in the fork itself. The orientation of the diametrical slit 62 is suitably fixed by a unidirectional ratchet pawl 63 capable of interferring with an abutment notch 64 carried on the periphery of fork 61, when said fork is driven in rotation by a motor 61a in a predetermined direction, that is clockwise with reference to Fig. 6.

Once the engagement has occurred, the fork 61 is driven in rotation in a direction opposite to that causing the interference of the ratchet pawl 63 with the abutment notch 64 so that the fork carries out the threading and winding upon itself of the tape length 54 and waste tape 45 as it is drawn from the first hub 16.

A count wheel 65 operatively engaged on the path of the tape length 54 and waste tape 45 being unwound is driven in rotation at an angular speed proportionate to the movement speed of the waste tape. When the difference between the angular speeds of the count wheel 65 and first hub 16 detected bv appropriate sensors not described as known per se, reaches a predetermined value, the rotational speed of the winding fork 61 is reduced in order to prevent the leader 13 from being pulled away from the first hub 16 or at all events damaged, at the end of the waste tape 45 unwinding.

When unwinding is over, the leading section 45b of the waste tape 45 is extracted from the front opening 18 of the cassette 3 together with the first portion 14 of the leader.

The first extractor element 21 is moved from its rest position in order to cause the engagement of the first leader portion 14 and the leading section 45b of the waste tape 45 on the engagement surface 28 of the first block 29 and the third holding seat 53 of the second block 31, respectively.

During this step, a portion of the waste tape 45 is required to be unwound from the winding fork 61, said fork being therefore obliged to rotate in the opposite direction with respect to the winding direction. In order to avoid the rotation of the fork 61 being undesirably stopped, provision is made for a release actuator 66 acting on the unidirectional ratchet pawl 63 and moving it to a position in which it does not interfere with the abutment notch 64 arranged in the fork.

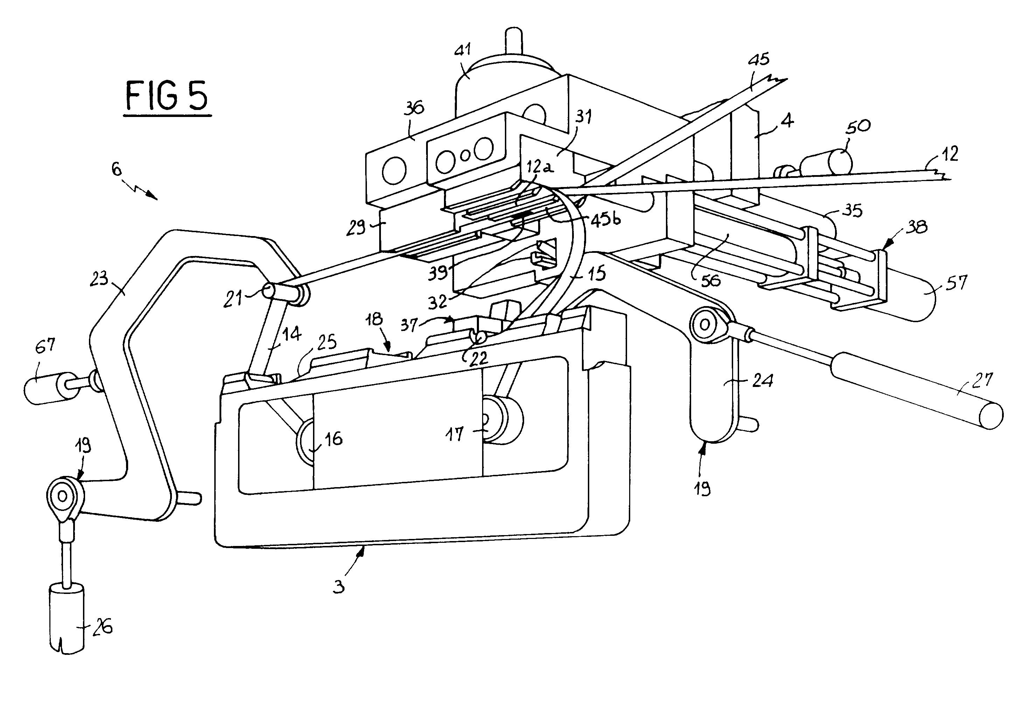

During the engagement of the first portion 14 of the leader and the leading section 45b of the waste tape 45 on blocks 29, 31, it is advantageously provided that the splice formed by the first adhesive joining tape 39 previously applied to said first leader portion and section, should be placed at a laterally offset position towards the second block 31 with respect to the cutting direction, as shown in Figs. 5 and 10.

To this end, during the shifting of the first extractor element 21 from the rest position, a second auxiliary actuator 67 (Fig. 5) is operated which is designed to act on the first drive arm 23 for stopping, against the action of the corresponding main actuator 26, the movement of the extractor element to a position intermediate the maximum-extracted position and rest position.

Subsequently the first cutting member 32 is operated and it cuts the first portion 14 of the leader, completely separating it from the first adesive tape 39, which is kept attached to the leading section 45b of the waste tape 45.

By operating the first and second movement actuators 56, 57 in combination, the second block 31 is disposed to its second work position so that the second holding seat 34 carrying the leading end 12a of the new use tape 12 to be loaded into the cassette 3 is brought into alignment with the engagement surface 28 of the first block 29.

Then the loading process goes on following the same modalities as known processes for loading C-O or V-O cassettes starting from the step of splicing the first portion of leader 14 to the leading end 12a of the use tape 12 to be wound, the operating sequence being that shown in Figs. 11 to 16.

Meanwhile the waste tape 45 wound on the fork 61 is cut by an auxiliary cutter 68 at the holding element 55, giving thereby origin to a new tape length 54 extending between the third holding seat 53 of the second block 31 and the holding element itself. The waste tape roll 69 formed on fork 61 is dropped in a manner known per se, due to the backward movement of the fork to the rest position, then the gripper element 59 can be brought back to its first work position at the holding element 55.

The invention achieves important advantages.

The process in question in fact enables all problems connected with the need for disposing of high amounts of waste tape-loaded cassettes to be eliminated. In particular, all costs to be borne, as known, when waste products are to be deposited in disposal installations, as well as cost resulting from the necessity of stocking and periodically transferring important amounts of waste cassettes can be avoided.

In addition, also the intrinsic value of the recovered cassettes represents an important profit as compared to the known art.

Attention is drawn to the fact that the process in question is adapted to be carried out on any type of apparatus used for loading C-O or V-O cassettes according to the known art. In fact known loading machines can be modified in accordance with the present invention, by addition of the auxiliary threading means, interconnecting means and sensor means. Taking into account the construction complexity of loading machines, the addition of the above devices represents a modification of easy accomplishment.

Although the present invention bas been described with reference to a specific embodiment, it should not be construed as limited to the details disclosed herein, as the disclosed embodiment is merely illustrative of the invention.

## Claims

1. A cassette tape loading process providing for recovery of cassettes previously loaded with waste tape, comprising the steps of:
- engaging in a work station (6) a cassette (3) containing a waste tape (45) spliced, by adhesive joining tapes (39, 43) applied to a leading section (45b) and a trailing section (45a) of said waste tape respectively, to leading and trailing portions (14, 15) respectively of a leader (13) engaged to first and second winding hubs (16, 17) housed in the cassette (3);
- extracting from a front opening (18) of the cassette (3), the second leader portion (15) together with the trailing section (45a) of the waste tape (45) wound on the first hub (16) of the cassette (3);
- cutting the second leader portion (15) in order to separate it from the trailing section (45a) of the waste tape (45);
- connecting the trailing section (45a) of the waste tape (45) to auxiliary threading means (51) operating at the outside of the cassette (3);
- unwinding the waste tape (45) from the first hub (16) through the auxiliary threading means (51), until the first portion (14) of leader (13) together with the leading section (45b) of the waste tape (45) has been extracted from the front opening (18) of the cassette (3);
- cutting the first portion (14) of leader (13) in order to separate it from the leading section (45b) of the waste tape (45) extracted from the cassette (3);
- aligning the first portion (14) of leader (13) with the leading end (12a) of a use tape (12) to be loaded into the cassette (3);
- splicing said leading end (12a) to the first leader portion (14);
- winding a desired amount of use tape (12) to be loaded, onto the first hub (16);
- cutting the use tape (12) loaded into the cassette (3) so as to separate a trailing end (12a) thereof from the leading end (12a) of the use tape to be loaded during a following processing cycle;
- aligning the trailing end (12a) of the use tape (12) loaded into the cassette (3) to the second portion (15) of leader (13);
- splicing the trailing end (12a) of the loaded use tape (12) to the second leader portion (15);
- winding the loaded use tape (12) and the second portion (15) of leader (13) joined to each other into the cassette (3) and eject the cassette (3) from the work station (6).

2. A process according to claim 1, characterized in that it further comprises the following steps:
- engaging, simultaneously with their being extracted from the cassette, the trailing section (45a) of the waste tape (45) and second portion (15) of the leader (13) respectively, on an engagement surface (28) of a first support block (29) and a first holding seat (30) exhibited by a second support block (31) and disposed in alignment with said engagement surface (28), said first and second blocks (29, 31) being located at opposite positions relative to the direction in which said cutting steps are carried out;
- moving said blocks 29, 31 with respect to each other after executing the cutting of the trailing portion (15) of leader (13), so as to align the waste tape (45) with an end portion (54a) of a tape length (54) discarded in a previous operating cycle and supported by a third holding seat 53 exhibited by the second block 31 and operatively connected to said auxiliary threading means (51);
- splicing the waste tape (45) with the tape length (54) previously discarded in order to carry out the step of connecting the waste tape (45) to the auxiliary threading means (51).

3. A process according to claim 2, characterized in that it further comprises the step of disengaging the waste tape (45) and discarded tape length (54) from said support blocks (29, 31) before carrying out the step of unwinding the waste tape (45).

4. A process according to claim 2, characterized in that it further comprises the steps of:
- engaging the first portion (14) of leader (13) and the leading section (45b) of the unwound waste tape (45) on the engagement surface (28) of the first block (29) and the third holding seat (53) of the second block (31) respectively, before carrying out the cutting of the first portion (14) of leader (13);
- moving the first and second blocks (29, 31) with respect to each other in order to align the first portion (14) of leader (13) with the leading end (12a) of the use tape (12) to be loaded, carried by a second holding seat (34) exhibited by the second block (31), before carrying out the step of splicing the use tape (12) to be loaded to the first portion (14) of leader (13).

5. A process according to claim 2, characterized in that, simultaneous with the step of engaging the trailing section (45a) of the waste tape (45) and the second portion (15) of leader (13) on said blocks (29, 31) respectively, a second adhesive joining tape (43) applied to the waste tape (45) and the second leader portion (15) is located to a position laterally offset towards the first block 29 with respect to the direction in which the cutting steps are carried out, so that said second adhesive joining tape (43) is kept engaged to the trailing section (45a) of the waste tape (45) following the step of cutting the second portion (15) of leader (13).

6. A process according to claim 4, characterized in that, simultaneously with the step of engaging the first portion (14) of leader (13) and the leading section (45b) of the waste tape (45) on said blocks (29, 31) respectively, a first adhesive joining tape (39) applied to the leading section of the waste tape (45) and the first leader portion (13) is located to a position laterally offset towards the second block (31), with respect to the direction in which the cutting steps are carried out, so that said first adhesive joining tape (39) is kept engaged to the leading section (45b) of the waste tape (45) following the step of cutting the first portion (14) of leader (13).

7. A process according to claim 1, characterized in that it further comprises the step of detecting the presence of waste tape (45) in the cassette (3) in the loading position on said first and/or second hub (16, 17).

8. A process according to claim 7, characterized in that it further comprises the step of winding all of said waste tape (45) in the cassette (3) onto said first hub (16) in response to the detection of waste tape (45) on said second hub (17).

9. A loading machine for loading tape cassettes, comprising:
- at least one work station (6) arranged to operatively engage a cassette being processed (3), containing at least one leader (13) having a first portion (14) and a second portion (15) engaged to first and second winding hubs (16, 17) respectively, located in the cassette itself;
- extraction means (19) for extracting the leader (13) from a front opening (18) of the cassette (3);
- an engagement surface (28) for receiving and engaging the first portion (14) of leader (13) extracted from the cassette;
- a first and a second holding seats (30, 34) arranged to receive and engage the second portion (15) of leader (13) extracted from the cassette (3) and a leading end (12a) of a use tape (12) to be loaded into the cassette (3), respectively;
- drive means (38) for selectively aligning the first and second holding seats (30, 34) with said engagement surface (28);
- first cutting means (32, 33) for separating the leading and trailing portions (14, 15) of the leader (15) extracted from said front opening (18) from each other, as well as cutting the use tape (12) loaded into the cassette (3);
- splicing means (37) for splicing the first portion (14) of leader (13) to the leading end (12a) of the use tape (12) to be loaded, as well as the second portion (15) of leader (13) to the trailing end (12a) of the use tape (12) loaded into the cassette (3);
said machine being characterized in that it further comprises:
- auxiliary threading means (51) for extracting a waste tape (45) wound onto a first hub of the cassette (3) from the cassette itself; and
- interconnecting means (52) for operatively connecting the auxiliary threading means (51) with a trailing section (45a) of the waste tape (45) previously separated from the second portion (15) of leader (13) by said cutting means (32, 33),
said cutting means (32, 33) being furtherly arranged for cutting the leading and trailing potions of the leader (13) near the respective ends (45a, 45b) of the waste tape (45).

10. A machine according to claim 9, characterized in that said interconnecting means (52) comprises at least a third holding seat (53) arranged to retain an end portion (54a) of a waste tape length (54) the foremost portion (54b) of which is engaged to the threading means (51).

11. An apparatus according to claim 9, characterized in that said engagement surface (28) is disposed on a first support block (29).

12. An Apparatus according to claim 9, characterized in that first and said second holding seets (30, 34) are disposed on a second block (31).

13. A machine according to claim 9, characterized in that said interconnecting means (52) comprises at least a third holding seat (53) disposed parallelly in side by side relation with the first and second holding seats (30, 34) formed in the second block (31), said third holding seat (53) being capable of alignment with the engagement surface (28) carried by the first block (29) upon the action of the drive means (38), in order to enable the trailing section (45a) of the waste tape (45) to be spliced to the end portion (54a) of the tape lenght (54), upon the action of the splicing means (37).

14. A machine according to claim 13, characterized in that said third holding seat (53) is formed directly in the second block (31), side by side with the second holding seat (34).

15. A machine according to claim 9, characterized in that said extraction means comprises first and second extractor elements (21, 22) each movable between first, second and third positions.

16. A machine according to claim 15, characterized in that said first position of said extractor elements (21, 22) is a rest position in which said extractor elements (21, 22) are positioned in an access space (25) formed in a cassette (3) engaged in said loading station (6), and wherein said second position of said extractor elements (21, 22) is and intermediate position which permits the tape extracted from a cassette (3) engaged in said loading station (6) to be shifted laterally with respect to said first, second, third and fourth tape holding means (28, 30, 34, 53).

17. A machine according to claim 16, characterized in that said extraction means (19) further comprises a main actuator (26, 27), for moving said first and second extractor elements (21,22) between said rest position, and a maximum-extracted position in which it is spaced apart from, and external to the cassette front opening (18), at least one auxiliary actuator (50, 67) susceptible of activation for interrupting the stroke of the extractor element towards the maximum-extracted position and stop it at said intermediate position being associated with each extractor element (21, 22).

18. A machine according to claim 9, characterized in that said auxiliary threading means (51) comprises a movable gripper element (59) for holding a foremost portion (54b) of tape lenght (54) and moving it into operative engagement with a tape take-up device (61).

19. A machine according to claim 18, characterized in that said auxiliary threading means (51) comprises:
- a holding element (55) designed to retain the foremost portion (54b) of the waste tape length (54);
- said gripper element (59) being movable between a first position in which it is disposed close to the holding element (55) for picking up the foremost portion (54b) of the tape length (54) and a second position in which it is spaced apart from the holding element (55) for extending the tape length (54) in a predetermined direction;
said tape take-up device comprising a winding fork (61) movable between a rest position in which it does not interfere with the movements of the gripper element (59) and an operating position in which it engages the tape length (54) extended by the gripper element, said fork (61) being operable in rotation for threading and winding upon itself the tape length (54) together with the waste tape (45) previously spliced to said tape length.

20. A machine according to claim 9, characterized in that it further comprises sensor means (44) for detecting the presence of the waste tape (45) in the cassette (3) engaged in the work station (6).

21. A machine according to claim 20, characterized in that said sensor means (44) comprises at least one photoemitter (46) and at least one photoreceiver (47) located inside and outside the cassette (3) engaged in the work station (ó) respectively, said photoreceiver(47) being arranged to detect the presence of the waste tape (45) wound onto the first hub (16) following the interception by the tape itself of a light signal issued from the photoemitter (46), since said leader (13) is made of transparent material.

22. A machine according to claim 21, characterized in that it further comprises at least a second photoreceiver (49) located externally of the cassette (3) at an opposite position to the first photoreceiver (47) and arranged to detect the presence of the waste tape (45) wound onto the second hub (17), following the interception by the tape itself of the light signal issued from the photoemitter (46).

23. A machine according to claim 20, characterized in that said sensor means (44) is capable of detecting whether waste tape (45) is wound on one or both of the hubs (16, 17) of a cassette (3) engaged in said loading station (6).

24. A machine according to claim 14, characterized in that said drive means (38) comprises:
- a first actuator (56) acting on the second block (31) for moving it between a first position in which the first holding seat (30) is in alignment with the engagement surface (28) of the first block (29) and a third position in which the third holding seat (53) is in alignment with the engagement surface (28); and
- a second actuator (57) fastened to the first actuator (56) and capable of activation for restraining the stroke of the second block (31) towards the third position and stop it to a second position in which the second holding seat (34) is aligned with the engagement surface (28).

## Patentansprüche

1. Ladeprozess eines Kassettenbandes zur Wiederverwertung von vorher mit Abfallband gefüllten Kassetten, umfassend die Arbeitsschritte:
- Ergreifen in einer Arbeitsstation (6) einer ein Abfallband (45) enthaltenden Kassette (3) über Klebebänder (39, 43), die jeweils an einem Kopfende (45b) und einem Schwanzende (45a) des Abfallbandes, jeweils an einem Kopfabschnitt und an einem Schwanzabschnitt (14, 15) eines Leaders (13) angebracht sind, die an einem ersten und an einem zweiten, in der Kassette (3) aufgenommenen Wickelkern (16, 17) angreifen;
- Auszug aus einer Stirnöffnung (18) der Kassette (3) des zweiten Abschnittes (15) des Leaders zusammen mit dem Schwanzende (45a) des auf dem ersten Kern (16) der Kassette (3) aufgewickelten Abfallbandes (45);
- Abschneiden des zweiten Abschnittes (15) des Leaders, um ihn vom Schwanzabschnitt (45a) des Abfallbandes (45) abzutrennen;
- Verbindung des Schwanzendes (45a) des Abfallbandes (45) mit außen auf die Kassette (3) wirkenden Hilfsmitnahmemitteln (51);
- Abwicklung des Abfallbandes (45) vom ersten Kern (16) über Hilfsmitnahmemittel (51), bis zum Auszug aus der Stirnöffnung (18) der Kassette (3), des ersten Abschnittes (14) des Leaders (13) zusammen mit dem Kopfende (45b) des Abfallbandes (45);
- Abschneiden des ersten Abschnittes (14) des Leaders (13) um ihn von dem Kopfende (45b) des aus der Kassette (3) ausgezogenen Abfallbandes zu trennen;
- Ausrichtung des ersten Abschnittes (14) des Leaders (13) mit dem Kopfbeginn (12a) eines in der Kassette (3) zu ladenden Magnetbandes (12);
- Verklebung des Kopfbeginnes (12a) mit dem ersten Abschnitt (14) des Leaders;
- Aufwickeln auf dem ersten Kern (16) einer gewünschten Menge von zu ladendem Magnetband (12);
- Abschneiden des in der Kassette (3) geladenen Magnetbandes (12) um davon ein Schwanzbeginn (12b) vom Kopfbeginn (12a) des im nachfolgenden Arbeitsgang zu ladenden Magnetbandes abzutrennen;
- Ausrichtung des Kopfbeginnes (12a) des in der Kassette (3) geladenen Magnetbandes (12) mit dem zweiten Abschnitt (15) des Leaders (13);
- Verklebung des Schwanzbeginnes (12a) des geladenen Magnetbandes (12) mit dem zweiten Abschnitt (15) des Leaders;
- Aufwickeln in der Kassette (3) des geladenen Bandes (12) und des zweiten Abschnittes (15) des Leaders (13), die miteinander verklebt wurden, und Auswerfen der Kassette (3) aus der Arbeitsstation (6).

2. Prozess nach Anspruch 1, dadurch gekennzeichnet, daß er die folgenden, weiteren Arbeitsschritte umfaßt:
- Ergreifen, zusammen mit deren Auszugsarbeitsschrittes aus der Kassette, des Schwanzendes (45a) des Abfallbandes (45) und des zweiten Abschnittes (15) des Leaders (13) jeweils an einer Angriffsfläche (28) eines ersten Halterungsklotzes (29) und an einer ersten Rückhalteaufnahme (30), die von einem zweiten Halterungsklotz (31) getragen und mit der Angriffsfläche (28) ausgerichtet ist, wobei der erste und der zweite Klotz (29, 31) in gegenüberliegenden Stellungen gegenüber der Richtung angeordnet sind, gemäß der die Schneidschritte durchgeführt werden,
- gegenseitige Verstellung der Klötze (29, 31) nach der Durchführung des Abtrennens des Schwanzabschnittes (15) des Leaders (13), um das Abfallband (15) mit einem Endabschnitt (54a) eines in einem vorangehenden Arbeitsgang verworfenen Bandstückes (54) in Ausrichtung zu bringen, das von einer dritten durch den zweiten Klotz (31) getragenen Rückhalteaufnahme (53) getragen wird und wirksam mit den Hilfsmitnahmemitteln (51) verbunden ist;
- Verklebung des Abfallbandes (45) mit dem zuvor verworfenen Bandstück (54), um den Arbeitsschritt der Verbindung des Abfallbandes (45) mit dem Hilfsmitnahmemitteln (51) durchzuführen.

3. Prozess nach Anspruch 2, dadurch gekennzeichnet, daß er überdies den Schritt der Freigabe des Abfallbandes (45) und des verworfenen Bandstückes (54) von den Halterungsklötzen (29, 31) umfaßt, bevor der Schritt der Abwicklung des Abfallbandes (45) verwirklicht wird.

4. Prozess nach Anspruch 2, dadurch gekennzeichnet, daß er überdies die Arbeitsschritte umfaßt:
- Ergreifen des ersten Abschnittes (14) des Leaders (13) und des Kopfendes (45b) des abgewickelten Abfallbandes (45) jeweils auf der Angriffsfläche (28) des ersten Klotzes (29) und auf der dritten Rückhalteaufnahme (53) des zweiten Klotzes (31), bevor der Schnitt des ersten Abschnittes (14) des Leaders (13) durchgeführt wird;
- gegenseitige Verstellung des ersten und des zweiten Klotzes (29, 31), um den ersten Abschnitt (14) des Leaders (13) mit dem Kopfbeginn (12a) des zu ladenden Magnetbandes (12) in Ausrichtung zu bringen, das von einer vom zweiten Klotz (31) aufgewiesenen zweiten Rückhalteaufnahme (34) getragen wird, bevor der Verklebungsschritt zwischen dem zu ladenden Magnetband (12) und dem ersten Abschnitt (14) des Leaders (13) durchgeführt wird.

5. Prozess nach Anspruch 2, dadurch gekennzeichnet, daß zusammen mit dem Schritt des Ergreifens des Schwanzendes (45a) des Abfallbandes (45) und des zweiten Abschnittes (15) des Leaders (13) jeweils an den Klötzen (29, 31), ein zweites am Abfallband (45) und am zweiten Abschnitt (15) des Leaders angebrachtes Klebeband (43) in einer zum ersten Klotz (29) gegenüber der Richtubg seitlich versetzten Stellung angeordnet wird, gemäß welcher Richtung die Schneidschritte durchgeführt werden, wodurch dieses zweite Klebeband (43) am Schwanzende (45a) des Abfallbandes (45) zufolge des Schneidschrittes des zweiten Abschnittes (15) des Leaders (13) in Eingriff bleibt.

6. Prozess nach Anspruch 4, dadurch gekennzeichnet, daß zusammen mit dem Schritt des Ergreifens des ersten Abschnittes (14) des Leaders (13) und des Kopfendes (45b) des Abfallbandes (45) jeweils an den Klötzen (29, 31) ein erstes am Kopfende des Abfallbandes (45) und am ersten Abschnitt des Leaders (13) angewandtes Klebeband (39) in einer zum zweiten Klotz (31) gegenüber der Richtung seitlich versetzter Stellung angeordnet wird, gemäß welcher Richtung die Schneidschritte durchgeführt werden, wodurch dieses erste Klebeband (39) am Kopfende (45b) des Abfallbandes (45) zufolge des Schneidschrittes des Kopfabschnittes (14) des Leaders (13) in Eingriff bleibt.

7. Prozess nach Anspruch 1, dadurch gekennzeichnet, daß er überdies den Schritt umfaßt, die Anwesenheit vom Abfallband (45) in der Kassette (3) in der Ladestellung an dem ersten und/oder zweiten Kern (16, 17) festzustellen.

8. Prozess nach Anspruch 7, dadurch gekennzeichnet, daß er überdies den Arbeitsschritt umfaßt, das gesamte Abfallband (45) in der Kassette (3) am ersten Kern (16) aufzuwickeln, in Antwort auf die Feststellung des Abfallbandes (45) am zweiten Kern (17).

9. Automatische Bandkassettenlademaschine, umfassend:
- mindestens eine Arbeitsstation (6), die wirksam eine in Bearbeitung befindliche Kassette (3) ergreift, die mindestens einen Leader (13) mit einem ersten Abschnitt (14) und einem zweiten Abschnitt (15) enthält, die jeweils an einem ersten und an einem zweiten Wickelkern (16, 17) angreifen, die in der Kassette selbst angeordnet sind;
- Auszugsmittel (19), um den Leader (13) aus einer Stirnöffnung (18) der Kassette (3) auszuziehen;
- eine Angriffsfläche (28), um den ersten Abschnitt (14) des aus der Kassette selbst ausgezogenen Leaders (13) ergreifend aufzunehmen;
- eine erste und eine zweite Rückhalteaufnahme (30, 34), die jeweils den zweiten (15) des aus der Kassette (3) ausgezogenen Leaders (13) und einen von einem in der Kassette (3) zu ladenden Magnetband aufgewiesenen Kopfbeginn (12a) ergreifend aufzunehmen bereitgestellt sind;
- Verstellmittel (38), um die erste und die zweite Rückhalteaufnahme (30, 34), wahlweise mit der Angriffsfläche (28) in Ausrichtung zu bringen;
- erste Schneidmittel (32, 33), um den Kopfabschnitt und den Schwanzabschnitt (14, 15) des aus der Stirnöffnung (18) ausgezogenen Leaders (13) voneinander zu trennen, sowie um das in der Kassette (3) geladenen Band (12) abzschneiden;
- Klebemittel (37), um den ersten Abschnitt (14) des Leaders (13) mit dem Kopfbeginn (12a) des zu ladenden Bandes (12) sowie den zweiten Abschnitt (15) des Leaders (13) mit dem Schwanzbeginn (12b) des in der Kassetten gelandenen Bandes (12) zu verkleben;
wobei diese Maschine dadurch gekennzeichnet ist, daß sie überdies umfaßt:
- Hilfsmitnahmemittel (51), um ein am ersten Kern der Kassette (3) aufgewickeltes Abfallband (45) aus der Kassette selbst auszuziehen; und
- Verbindungsmittel (52), um mit den Hilfmitnahmemitteln (51) ein Schwanzende (45a), das vorher vom zweiten Abschnitt (15) des Leaders (13) getrennt wurde, über die Schneidmittel (32, 33) wirksam zu verbinden,
wobei die Schneidmittel (32, 33) überdies dazu bereitgestellt sind, um die Kopf- und Schwanzabschnitte des Leaders (13) in der Nähe der jeweiligen Enden (45a, 45b) des Abfallbandes (45) abzuschneiden.

10. Maschine nach Anspruch 9, dadurch gekennzeichnet, daß die Verbindungsmittel (52) mindestens eine dritte Rückhalteaufnahme (35) umfassen, die dazu bereitgestellt ist, einen Endabschnitt (54a) eines Abfallbandstückes (54) zurückzuhalten, das einen Anfangsabschnitt (54b) mit den Mitnahmemitteln (51) in Eingriff besitzt.

11. Maschine nach Anspruch 9, dadurch gekennzeichnet, daß die Angriffsfläche (28) an einem ersten Halterungsklotz (29) angeordnet ist.

12. Maschine nach Anspruch 9, dadurch gekennzeichnet, daß die erste und die zweite Rückhalteaufnahme (30, 34) am zweiten Klotz (31) angeordnet sind.

13. Maschine nach Anspruch 9, dadurch gekennzeichnet, daß die Verbindungsmittel (52) mindestens eine dritte Rückhalteaufnahme (53) umfassen, die parallel gegenüber der ersten und der zweiten, im zweiten Klotz (31) gebildeten Rückhalteaufnahmen (30, 34) parallel ausgerichtet angeordnet sind, wobei die dritte Rückhalteaufnahme (53) in der Lage ist, mit der vom ersten Klotz (29) getragenen Angriffsfläche (28) durch Einwirkung der Verstellmittel (38) ausgerichtet zu werden, um die Verklebung des Schwanzendes (45a) des Abfallbandes (45) mit dem Endabschnitt (54a) des Bandstückes (54) durch Einwirkung der Klebemittel (37) zu erlauben.

14. Maschine nach Anspruch 13, dadurch gekennzeichnet, daß die dritte Rückhalteaufnahme (53) unmittelbar am zweiten Klotz (31) in einer gegenüber der zweiten Rückhalteaufnahme (34) angereihten Stellung ausgearbeitet ist.

15. Maschine nach Anspruch 9, dadurch gekennzeichnet, daß die Auszugsmittel erste und zweite Auszugselemente (21, 22) erfassen, die jeweils zwischen einer ersten, einer zweiten und einer dritten Stellung beweglich sind.

16. Maschine nach Anspruch 15, dadurch gekennzeichnet, daß die erste Stellung der Auszugsmittel (21, 22) eine Ruhestellung ist, in der die Auszugsmittel (21, 22) in einer Zugangsaussparung (25) angeordnet sind, die in einer Kassette (3) gebildet ist, die in der Ladestation (6) in Eingriff steht, und dadurch, daß die zweite Stellung der Auszugselemente (21, 22) eine Zwischenstellung ist, die dem aus einer in der Ladestation (6) in Eingriff stehenden Kassette (3) ausgezogenen Band erlaubt, seitlich gegenüber den ersten, zweiten, dritten und vierten Bandrückhaltemitteln (28, 30, 34, 53) verschoben zu werden.

17. Maschine nach Anspruch 16, dadurch gekennzeichnet, daß die Auszugsmittel (19) überdies einen Hauptzylinder (26, 27) umfassen, um die ersten und die zweiten Auszugsmittel (21, 22) zwischen der Ruhestellung und einer höchsten Auszugsstellung zu bewegen, in der er außen von der Stirnöffnung (18) der Kassette entfernt ist, wobei jedem Auszugselement (21, 22) mindestens ein Hilfszylinder (50, 67) zugeordnet ist, der aktivierbar ist, um den Hube des Auszugselementes selbst in Richtung der höchsten Auszugsstellung zu blockieren, indem er in dieser Zwischenstellung angehalten wird.

18. Maschine nach Anspruch 9, dadurch gekennzeichnet, daß daß die Hilfsmitnahmemittel (51) ein bewegliches Greifelement (59) umfassen, um den Anfangsabschnitt (54b) eines Bandstückes (54) zurückzuhalten und ihn in eine wirksame Ergreifung mit einer Bandwickelvorrichtung (61) zu verstellen.

19. Maschine nach Anspruch 18, dadurch gekennzeichnet, daß die Hilfsmitnahmemittel (51) umfassen:
- ein Rückhalteelement (55), das dazu bereitgestellt ist, den Anfangsabschnitt (54b) des Abfallbandstückes (54) zurückzuhalten;
- wobei das Greifelement (59) zwischen einer ersten Stellung, in der es im Bereich des Rückhalteelementes (55) zur Entnahme des Anfangsabschnittes (54b) des Bandstückes (54) angeordnet ist, und einer zweiten Stellung beweglich ist, in der es vom Rückhalteelement (55) entfernt ist, um das Bandstück (54) gemäß einer vorbestimmten Richtung auszubreiten; wobei die Bandwickelvorrichtung eine Wickelgabel (61) umfaßt, die zwischen einer Ruhestellung, in der sie mit der Verstellung des Greifelementes (59) nicht zusammenwirkt, und einer Arbeitsstellung beweglich ist, in der sie das durch das Greifelement selbst ausgebreitete Bandstück (54) ergreift, wobei die Gabel (61) drehbeweglich ist, um auf sich selbst das Bandstück (54) und das zuerst mit dem Bandstück selbst verklebten Abfallband (54) mitzunehmen und aufzuwickeln.

20. Maschine nach Anspruch 9, dadurch gekennzeichnet, daß sie überdies Fühlermittel (44) umfaßt, um die Anwesenheit des Abfallbandes (45) der in der Arbeitsstation (6) in Eingriff stehenden Kassette (3) festzustellen.

21. Maschine nach Anspruch 20, dadurch gekennzeichnet, daß die Fühlermittel (44) mindestens einen Fotoemitter (46) und mindestens einen ersten Fotoempfänger (47) umfassen, die jeweils innerhalb und außerhalb der in der Arbeitsstation (6) in Eingriff stehenden Kassette (3) angeordnet sind, wobei der Fotoempfänger (47) dazu bereitgestellt ist, die Anwesenheit des am ersten Kern (16) aufgewickelten Abfallbandes (45) zufolge der Unterbrechung seitens des Bandes selbst eines vom Fotoemitter (46) abgegebenen Lichtsignals festzustellen, wobei der Leader (13) aus durchsichtigem Material besteht.

22. Maschine nach Anspruch 21, dadurch gekennzeichnet, daß sie überdies mindestens einen zweiten Fotoempfänger (49) umfaßt, der außerhalb der Kassette (3) in einer gegenüber dem ersten Fotoempfänger (47) abgewandten Stellung angeordnet und dazu bereitgestellt ist, die Anwesenheit des am zweiten Kern (17) aufgewickelten Abfallbandes (45) zufolge der Unterbrechung des vom Fotoemitter (46) ausgesendeten Lichtsignals seitens des Bandes selbst festzustellen.

23. Maschine nach Anspruch 20, dadurch gekennzeichnet, daß die Fühlermittel (44) in der Lage sind festzustellen, ob das Abfallmagnetband (45) auf einem der Kerne (16, 17) oder an beiden Kernen einer in der Ladestation (6) in Eingriff stehenden Kassette (3) aufgewickelt ist.

24. Maschine nach Anspruch 14, dadurch gekennzeichnet, daß die ersten Verstellmittel (38) umfassen:
- einen ersten auf den zweiten Klotz (31) wirkenden Zylinder (56), um ihn zwischen einer ersten Stellung, in der die erste Rückhalteaufnahme (30) mit der Angriffsfläche (28) des ersten Klotzes (29) ausgerichtet ist, und einer zweiten Stellung zu verstellen, in der die dritte Rückhalteaufnahme (53) mit der Angriffsfläche (28) ausgerichtet ist, und
- einen zweiten Zylinder (57) der gegenüber dem ersten Zylinder (56) festliegt und aktivierbar ist, um den Hub des zweiten Klotzes (31) in Richtung der dritten Stellung zu begrenzen und ihn in einer zweiten Stellung zu blockieren, in der die zweite Rückhalteaufnahme (34) mit der Angriffsfläche (28) ausgerichtet ist.

## Revendications

1. Méthode de chargement de cassettes à bande permettant de charger à nouveau des cassettes qui ont été précédemment chargées avec une bande présentant un défaut, comprenant les étapes suivantes:
- engager dans un poste de travail (6) une cassette (3) contenant une bande défectueuse (45) soudée, par des bandes adhésives de jonction (39, 43) appliquées respectivement à une section initiale (45b) et à une section finale (45a) de ladite bande défectueuse, à des portions respectivement initiale et finale (14, 15) d'une amorce (13) reliées à un premier et un second moyeux (16, 17) logés dans la cassette (3);
- extraire d'une ouverture de face (18) de la cassette (3), la seconde portion (15) d'amorce ensemble avec la section finale (45a) de la bande défectueuse (45) enroulée sur le premier moyeu (16) de la cassette (3);
- découper la seconde portion (15) d'amorce dans le but de la séparer de la section finale (45a) de la bande défectueuse (45);
- relier la section finale (45a) de la bande défectueuse (45) à des moyens d'entraînement auxiliaires (51) opérant à l'extérieur de la cassette (3);
- dérouler la bande défectueuse (45) du premier moyeu (16) par l'intermédiaire des moyens d'entraînement auxiliaires (51), jusqu'à quand on a extrait de l'ouverture de face (18) de la cassette (3) la première portion (14) de l'amorce (13) ensemble avec la section initiale (45b) de la bande défectueuse (45);
- découper la première portion (14) de l'amorce (13) en vue de la séparer de la section initiale (45b) de la bande défectueuse (45) extraite de la cassette (3);
- aligner la première portion (14) de l'amorce (13) avec l'extrémité initiale (12a) d'une bande d'usage (12) à charger dans la cassette (3);
- souder ladite extrémité initiale (12a) à la première portion (14) d'amorce;
- enrouler sur le premier moyeu (16) une quantité désirée de bande d'usage (12) à charger;
- découper la bande d'usage (12) chargée dans la cassette (3) pour en séparer une extrémité finale (12b) de l'extrémité initiale (12a) de la bande d'usage à charger pendant le cycle de traitement suivant;
- aligner l'extrémité finale (12b) de la bande d'usage (12) chargée dans la cassette (3) à la seconde portion (15) de l'amorce (13);
- souder l'extrémité finale (12b) de la bande d'usage (12) chargée à la seconde portion (15) d'amorce;
- enrouler dans la cassette (3) la bande d'usage (12) chargée et la seconde portion (15) de l'amorce (13) réciproquement unies et éjecter la cassette (3) du poste de travail (6).

2. Méthode selon la revendication 1, caractérisée en ce qu'elle comporte en outre les étapes suivantes:
- engager, en même temps qu'elles sont extraites de la cassette, la section finale (45a) de la bande défectueuse (45) et respectivement la seconde portion (15) de l'amorce (13) sur une surface d'engagement (28) d'un premier bloc de support (29) et sur un premier siège de retenue (30) présenté par un deuxième bloc de support (31) et disposé en alignement avec ladite surface d'engagement (28), lesdits premier et deuxième blocs (29, 31) étant situés à des positions opposées par rapport à la direction selon laquelle sont effectuées lesdites étapes de découpage;
- déplacer lesdits blocs (29, 31) l'un par rapport à l'autre après avoir exécuté le découpage de la portion finale (15) de l'amorce (13), de manière à aligner la bande défectueuse (45) à une portion d'extrémité (54a) d'une longueur de bande (54) mise au rebut dans un cycle précédent de traitement et supportée par un troisième siège de retenue (53) présenté par le deuxième bloc (31) et relié de manière opérationnelle auxdits moyens d'entraînement auxiliaires (51);
- souder la bande défectueuse (45) à la longueur de bande (54) précédemment mise au rebut pour effectuer l'étape de relier la bande défectueuse (45) aux moyens d'entraînement auxiliaires (51).

3. Méthode selon la revendication 2, caracterisée en ce qu'elle comporte en outre l'étape de dégager desdits blocs de support (29, 31) la bande défectueuse (45) et la longueur de bande mise au rebut (54) avant la réalisation de l'étape de déroulement de la bande défectueuse (45).

4. Méthode selon la revendication 1, caractérisée en ce qu'elle comporte en outre les étapes suivantes:
- engager la première portion (14) de l'amorce (13) et la section initiale (45b) de la bande défectueuse déroulée (45) sur la surface d'engagement (28) du premier bloc (29) et respectivement sur le troisième siège de retenue (53) du deuxième bloc (31), avant d'effectuer le découpage de la première portion (14) de l'amorce (13);
- déplacer l'un par rapport à l'autre les premier et deuxième blocs (29, 31), en vue d'aligner la première portion (14) de l'amorce (13) à l'extrémité initiale (12a) de la bande d'usage (12) à charger, portée par un deuxième siège de retenue (34) présenté par le deuxième bloc (31), avant d'effectuer l'étape de souder la bande d'usage (12) à charger à la première portion (14) de l'amorce (13).

5. Méthode selon la revendication 2, caractérisée en ce que, simultanément à l'étape d'engager la section finale (45a) de la bande défectueuse (45) et respectivement la seconde portion (15) de l'amorce (13) sur lesdits blocs (29, 30), une deuxième bande adhésive de jonction (43) appliquée à la bande défectueuse (45) et à la seconde portion (15) d'amorce est située à une position latéralement décalée vers le premier bloc (29) par rapport à la direction dans laquelle sont exécutées les étapes de découpage, de sorte que ladite deuxième bande adhésive de jonction (43) est maintenue engagée à la section finale (45a) de la bande défectueuse (45) à la suite de l'étape de découpage de la seconde portion (15) de l'amorce (13).

6. Méthode selon la revendication 4, caractérisée en ce que, simultanément à l'étape d'engager la première portion (14) de l'amorce (13) et respectivement la section initiale (45b) de la bande défectueuse (45) sur lesdits blocs (29, 31), une première bande adhésive de jonction (39) appliquée à la section initiale de la bande défectueuse (45) et à la première portion (13) d'amorce est située à une position latéralement décalée vers le deuxième bloc (31), par rapport à la direction dans laquelle sont effectuées les étapes de découpage, de telle sorte que la première bande adhésive de jonction (39) est maintenue engagée à la section initiale (45b) de la bande défectueuse (45) à la suite de l'étape de découpage de la première portion (14) de l'amorce (13).

7. Méthode selon la revendication 1, caractérisée en ce qu'elle comporte en outre l'étape de détecter la présence de bande défectueuse (45) dans la cassette (3) en position de chargement sur ledit premier et/ou second moyeux (16, 17).

8. Méthode selon la revendication 7, caractérisée en ce qu'elle comporte en outre l'étape d'enrouler la quantité entière de ladite bande défectueuse (45) dans la cassette (3) sur ledit premier moyeu (16) en réponse à la détection de bande défectueuse (45) sur ledit second moyeu (17).

9. Machine de chargement pour charger des cassettes à bande, comprenant:
- au moins un poste de travail (6) destiné à engager de manière opérationnelle une cassette en cours de traitement (3), contenant au moins une amorce (13) ayant une première portion (14) et une seconde portion (15) engagées respectivement à des premier et deuxième moyeux (16, 17), situés dans la cassette elle-même;
- des moyens d'extraction (19) pour extraire l'amorce (13) d'une ouverture de face (18) de la cassette (3);
- une surface d'engagement (28) pour recevoir et engager la première portion (14) de l'amorce (13) extraite de la cassette;
- un premier et un deuxième sièges de retenue (30, 34) destinés à recevoir et à engager la seconde portion (15) de l'amorce (13) extraite de la cassette (3) et respectivement une extrémité initiale (12a) d'une bande d'usage (12) à charger dans la cassette (3);
- des moyens d'actionnement (38) pour aligner sélectivement les premier et deuxième sièges de retenue (30, 34) à ladite surface d'engagement (28);
- des premiers moyens de découpage (32, 33) pour séparer l'une de l'autre les portions initiale et finale (14, 15) de l'amorce (15) extraite de ladite ouverture de face (18), et également découper la bande d'usage (12) chargée dans la cassette (3);
- des moyens de soudage (37) pour souder la première portion (14) de l'amorce (13) à l'extrémité initiale (12a) de la bande d'usage (12) à charger, et également la seconde portion (15) de l'amorce (13) à l'extrémité finale (12a) de la bande d'usage (12) chargée dans la cassette (3);
ladite machine étant caractérisée en ce qu'elle comporte en outre:
- des moyens d'entraînement auxiliaires (51) pour extraire de la cassette (3) une bande défectueuse (45) enroulée sur un premier moyeu de la cassette elle-même; et
- des moyens d'interconnexion (52) pour relier de manière opérationnelle les moyens d'entraînement auxiliaires (51) à la section finale (45a) de la bande défectueuse (45) précédemment séparée de la seconde portion (15) de l'amorce (13) par lesdits moyens de découpage (32, 33), lesdits moyens de découpage (32, 33) étant en outre arrangés de manière à découper les portions initiale et finale de l'amorce (13) à proximité des extrémités respectives (45a, 45b) de la bande défectueuse (45) .

10. Machine selon la revendication 9, caractérisée en ce que lesdits moyens d'interconnexion (52) comportent au moins un troisième siège de retenue (53) convenablement arrangé pour retenir une portion d'extrémité (54a) d'une longueur de bande défectueuse (54) dont la portion avant (54b) est engagée aux moyens d'entraînement (51).

11. Appareil selon la revendication 9, caractérisé en ce que ladite surface d'engagement (28) est disposée sur un premier bloc de support (29).

12. Appareil selon la revendication 9, caractérisé en ce que lesdits premier et deuxième sièges de retenue (30, 34) sont disposés sur un deuxième bloc (31).

13. Machine selon la revendication 9, caractérisée en ce que lesdits moyens d'interconnexion (52) comportent au moins un troisième siège de retenue (53) disposé parallèlement et côte à côte par rapport aux premier et deuxième sièges de retenue (30, 34) ménagés dans le deuxième bloc (31), ledit troisième siège de retenue (53) étant susceptible d'alignement avec la surface d'engagement (28) portée par le premier bloc (29), sous l'action des moyens d'actionnement (38), en vue de permettre que la section finale (45a) de la bande défectueuse (45) soit soudée à la portion d'extrémité (54a) de la longueur de bande (54), par l'action des moyens de soudage (37).

14. Machine selon la revendication 13, caractérisée en ce que ledit troisième siège de retenue (53) est formé directement dans la deuxième bloc (31), côte à côte par rapport au deuxième siège de retenue (34).

15. Machine selon la revendication 9, caractérisée en ce que lesdits moyens d'extraction comportent des premier et deuxième éléments extracteurs (21, 22), chacun étant mobile entre des première, deuxième et troisième positions.

16. Machine selon la revendication 15, caractérisée en ce que ladite première position desdits éléments extracteurs (21, 22) est une position de repos dans laquelle lesdits éléments extracteurs (21, 22) sont positionnés en correspondance d'un espace d'accès (25) formé dans une cassette (3) engagée dans ledit poste de chargement (6), et en ce que ladite deuxième position desdits éléments extracteurs (21, 22) est une position intermédiaire permettant à la bande extraite d'une cassette (3) engagée dans ledit poste de chargement (6) d'être déplacée latéralement par rapport auxdits premier, deuxième, troisième et quatrième moyens de retenue de la bande (28, 30, 34, 53).

17. Machine selon la revendication 16, caractérisée en ce que lesdits moyens d'extraction (19) comportent en outre un actionneur principal (26, 27) pour déplacer lesdits premier et deuxième éléments extracteurs (21, 22) entre ladite position de repos et une position d'extraction maximum dans laquelle ils sont éloignés de l'ouverture de face (18) de la cassette et se trouvent à l'extérieur de celle-ci, à chaque élément extracteur (21, 22) étant associé au moins un actionneur auxiliaire (50, 67) susceptible d'activation pour interrompre la course de l'élément extracteur vers la position d'extraction maximum et l'arrêter à ladite position intermédiaire.

18. Machine selon la revendication 9, caractérisée en ce que lesdits moyens d'entraînement auxiliaires (51) comportent un élément pinceur mobile (59) pour retenir une portion avant (54b) de la longueur de bande (54) et la déplacer en engagement opérationnel avec un dispositif enrouleur de bande (61).

19. Machine selon la revendication 18, caractérisée en ce que lesdits moyens d'entraînement auxiliaires (51) comportent:
- un élément de retenue (55) destiné à retenir la portion avant (54b) de la longueur de bande défectueuse (54);
- ledit élément pinceur (59) étant mobile entre une première position à laquelle il est disposé à proximité de l'élément de retenue (55) pour saisir la portion avant (54b) de la longueur de bande (54) et une deuxième position à laquelle il est écarté de l'élément de retenue (55) pour étendre la longueur de bande (54) dans une direction prédéterminée;
- ce dispositif enrouleur de bande comprenant une fourche d'enroulement (61) mobile entre une position de repos à laquelle il n'interfère pas avec les mouvements de l'élément pinceur (59) et une position de travail dans laquelle il engage la longueur de bande (54) étendue par l'élément pinceur, ladite fourche (61) étant susceptible d'actionnement en rotation pour entraîner et enrouler sur elle-même la longueur de bande (54) ensemble avec la bande défectueuse (45) précédemment soudée à ladite longueur de bande.

20. Machine selon la revendication 9, caractérisée en ce qu'elle comporte en outre des moyens capteurs (44) pour détecter la présence de la bande défectueuse (45) dans la cassette (3) engagée au poste de travail (6).

21. Machine selon la revendication 20, caractérisée en ce que lesdits moyens capteurs (44) comportent au moins un photo-émetteur (46) et au moins un photo-récepteur (47) situés respectivement à l'intérieur et à l'extérieur de la cassette (3) engagée dans le poste de travail (6), ledit photo-récepteur (47) étant destiné à détecter la présence de la bande défectueuse (45) enroulée sur le premier moyeu (16) à la suite de l'interception de la part de la bande elle-même d'un signal lumineux émis par le photo-émetteur (46), du fait que ladite amorce (13) est en matière transparente.

22. Machine selon la revendication 21, caractérisée en ce qu'elle comporte en outre au moins un deuxième photorécepteur (49) situé à l'extérieur de la cassette (3) à une position opposée par rapport au premier photorécepteur (47) et arrangé pour détecter la présence de la bande défectueuse (45) enroulée sur le second moyeu (17), à la suite de l'interception de la parte de la bande elle-même d'un signal lumineux émis par le photo-émetteur (46).

23. Machine selon la revendication 20, caractérisée en ce que lesdits moyens capteurs (44) sont en mesure de détecter si la bande défectueuse (45) est enroulée sur l'un des moyeux (16, 17) d'une cassette (3) engagée au poste de travail (6), ou sur tous les deux.

24. Machine selon la revendication 14, caractérisée en ce que lesdits moyens d'actionnement (38) comportent:
- un premier actionneur (56) agissant sur le deuxième bloc (31) pour le déplacer entre une première position dans laquelle le premier siège de retenue (30) est en alignement avec la surface d'engagement (28) du premier bloc (29) et une troisième position dans laquelle le troisième siège de retenue (53) est en alignement avec la surface d'engagement (28); et
- un deuxième actionneur (57) fixé au premier actionneur (56) et susceptible d'activation pour limiter la course du deuxième bloc (31) vers la troisième position et l'arrêter à une deuxième position à laquelle le deuxième siège de retenue (34) est aligné à la surface d'engagement (28).
